# EUROPÄISCHE PATENTSCHRIFT

(11) **EP 1 062 859 B1**
(45) Veröffentlichungstag und Bekanntmachung des Hinweises auf die Patenterteilung: **25.07.2007**
(21) Anmeldenummer: 00250132.8
(22) Anmeldetag: 27.04.2000
(51) Int. Cl.: A01F 15/08

(54) **Ballenpresse**
Baler
Presse-botteleuse

(30) Priorität: 17.06.1999 DE 19928819
(43) Veröffentlichungstag der Anmeldung: 27.12.2000
(73) Patentinhaber: Usines Claas France, 57140 St. Remy/Woippy (FR)
(72) Erfinder: Hawlas, Martin, 33428 Harsewinkel (DE); Nonhoff, Ansgar, 66798 Wallerfangen (DE); Scholz, Egbert, 33378 Rheda-Wiedenbrück (DE)
(74) Vertreter: Radwer, Dieter

(56) Entgegenhaltungen:
- DE-U- 29 517 425
- US-A- 3 974 632
- US-A- 4 198 904
- CLAAS: "quadrant 1100 150/247.419.5 roto cut" , ANNOUNCEMENT CLAAS, XX, XX, PAGE(S) 1-16 XP002023162 * Seite - *

## Beschreibung

Die Erfindung betrifft eine Ballenpresse gemäß dem Oberbegriff des Anspruchs 1 für landwirtschaftliche Erntegüter, wie Silage, Heu, Stroh oder dergleichen, mit einer weiter verbesserten Ablegevorrichtung zum Absetzen der gepreßten Ballen auf eine Erntefläche.

Bekanntermaßen sind Ballenpressen, vornehmlich Großballenpressen, mit Einrichtungen ausgestattet, über die die inhaltsschweren, hochverdichteten Ballen nach Verlassen des Preßkanals schonend auf die abgeerntete Fläche abgesetzt werden - Firmenprospekt "CLAAS Quadrant 1150/1150 ROTO CUT" 40/247415.8 (08/96); "CLAAS Quadrant 2000 und 2000 RC" 247535.0 (10/98).

Diese Einrichtungen bestehen im allgemeinen aus mehreren, gelenkig miteinander verbundenen Elementen, die durch ein Rahmengestell und Transportrollen, die quer zur Laufrichtung der den Preßkanal verlassenden Ballen angeordnet sind, gebildet werden. Die Einrichtungen, auch als End-, Rollen- oder Ballenrutsche bezeichnet, sind in Verlängerung des Preßkanals angebracht und durch Halteketten am Preßkanalgehäuse angelenkt, wobei das dem Preßkanal benachbarte Rutschenelement mit dem Preßkanalboden ein- und ausschwenkbar verbunden ist.

Die auf diese Weise ausgebildeten und angeordneten Rutschen erhöhen in der Arbeitsstellung zwangsläufig die Gesamtlänge der Erntemaschine, die für den Straßentransport, beispielsweise beim Wechsel der Ernteflächen, wieder verringert werden muß. Zu diesem Zweck werden die Rutschenelemente durch die Bedienperson des Erntekomplexes gegeneinander eingeschwenkt und in eine Transportstellung verbracht, in der die eingeschwenkten Rutschenelemente annähernd senkrecht zur Ebene des Preßkanalbodens positioniert werden und die Öffnung des Preßkanals verschließen. Die eingeschwenkten und hochgeklappten Rutschenelemente dienen dabei gleichzeitig als zusätzliche Sicherungseinrichtung gegen ein unbeabsichtigtes Herausrutschen eines Ballens während des Straßentransportes, der nach Aschluß des Ernteprozesses unter Umständen im Preßkanal verblieben ist und nicht ausgeworfen wurde.

Das Umrüsten der Rutschen aus einer Betriebsstellung in eine Transportstellung und umgekehrt ist regelmäßig mit einem Vorfahrtstop der Erntemaschine und mit relativ aufwendiger manueller Tätigkeit der Bedienperson verbunden.

Aus DE 295 17 425 U1 ist eine Ballenpresse mit einer weiter verbesserten Ablegevorrichtung bekannt. Die Ablegevorrichtung besteht aus gegeneinander einklappbaren Elementen, die durch gesonderte Scharniere miteinander verbunden sind. Die Scharniere sind Bestandteil einer Betätigungsvorrichtung, die aus einem viergelenkigen Koppelgetriebe, einem das Koppelgetriebe antreibenden und als Schubstange dienenden Übertragungsmittel und einem eine Zug- und/oder Druckkraft erzeugenden Stellglied besteht.

Mit Hilfe der Betätigungsvorrichtung kann die Ablegevorrichtung ohne manuellen Kraftaufwand in einer benutzerfreundlichen Art und Weise vom Bedienstand der Erntemaschine aus der Betriebs- und Arbeitsstellung in die Transportstellung und zurück verstellt werden. In ihrer Transportstellung befinden sich die Elemente der Ablegevorrichtung wiederum in einer annähernd senkrechten Stellung zur Bewegungsrichtung der gepreßten Ballen und verschließen in der Transportstellung die Preßkanalöffnung der Ballenpresse.

Trotz der wesentlichen Arbeitserleichterung für die Bedienperson und der nicht unmaßgeblichen Einsparung an Umrüstzeiten für das Verstellen der Ablegevorrichtung sind der konstruktive Aufwand und die damit verbundenen Kosten für die mechanische Betätigungsvorrichtung der Ablegevorrichtung relativ hoch.

Der Erfindung liegt die Aufgabe zugrunde, eine Ablegevorrichtung zu schaffen, die ohne hohen konstruktionsseitigen Aufwand vom Bedienstand des Erntemaschinenkomplexes mechanisch aus einer Arbeits- und Betriebsstellung in eine Transportstellung und zurück umgerüstet werden kann und die in der Transportstellung die Auslaßöffnung des Preßkanals sicher verschließt.

Erfindungsgemäß wird die Aufgabe durch eine Ablegevorrichtung entsprechend der im Anspruch 1 angegebenen Merkmale gelöst. Weitere vorteilhafte Ausbildungen der Erfindung ergeben sich aus den Unteransprüchen 2 bis 8.

Die erfindungsgemäße Ablegevorrichtung besteht in ihrem Grundaufbau, wie an sich bekannt, aus mehreren mit Transportrollen ausgerüsteten plattenförmigen Elementen, die durch ein einfaches Drehgelenk miteinander verbunden und in ihrer ausladenden Arbeitsstellung über Halteketten am rückwärtigen Endabschnitt des Preßkanals angelenkt sind. Für die Umrüstung der Ablegevorrichtung aus der Arbeits- und Betriebsstellung in eine Transportstellung und umgekehrt wird mindestens ein Abschlußelement der Ablegevorrichtung mit Hilfe einer Betätigungsvorrichtung, vorzugsweise ein hydraulischer Arbeitszylinder, um ca. 90° zur Preßrichtung eingeklappt und die übrigen Elemente ebenfalls mit Hilfe eines Arbeitszylinders schubladenartig so unter den Boden des Preßkanals der Ballenpresse verbracht, daß das um 90° zur Preßrichtung eingeklappte Abschlußelement die Auslaßöffnung des Preßkanals verschließt und auf diese Weise gleichzeitig als Sicherung für den Verschluß der Auslaßöffnung dient.

Vorteilhafterweise sind in den Hydraulikkreis der Betätigungsvorrichtung der Ablegevorrichtung für die gepreßten Erntegutballen Stellglieder angeordnet, die durch ein Druckbegrenzungsventil und ein Sperrventil, das manuell betätigt werden kann, gebildet werden. Das Druckbegrenzungsventil hat die Funktion einer Sicherheitseinrichtung und schaltet die Betätigungsvorrichtung ab, wenn es im Prozeß der Umstellung der Ablegevorrichtung in die jeweilige Betriebs- bzw. Transportstellung zu Störungen kommt, die zu Schäden oder Ausfällen des Erntemaschinenkomplexes führen können. Bei Ansteigen des Arbeitsdruckes im Hydraulikkreis der Betätigungsvorrichtung unterbricht das Druckbegrenzungsventil den Umstellprozeß so rechtzeitig, daß durch die Bedienperson die Ursachen für den Druckanstieg ermittelt und beseitigt werden können, wobei das Ansteigen des hydraulischen Arbeitsdruckes im Druckbegrenzungsventil und das Ansprechen des Ventils vorteilhafterweise im Bedienstand des Erntemaschinenkomplexes optisch und akustisch angezeigt wird, um rechtzeitig eine manuelle Kontrolle vornehmen und die geeigneten Maßnahmen zur Beseitigung der Ursachen für die Abweichungen von den eingestellten Betriebsparametern einleiten zu können.

Durch das ebenfalls im Hydraulikkreis der Betätigungsvorrichtung angeordnete Sperrventil kann die Betätigungsvorrichtung entriegelt und das in Transportstellung befindliche Abschlußelement abgesenkt werden, das den Preßkanal, beispielsweise für Kontroll-, Wartungs- oder Reparaturarbeiten bei abgestellter Erntemaschine, freigibt.

Das Umrüsten der Ablegevorrichtung in die jeweilige Betriebs- oder Transportstellung, d.h. das Ein- oder Ausschwenken des Abschlußelementes in bzw. aus seiner annähernd senkrechten Transportstellung und das Verstellen der übrigen Elemente der Ablegevorrichtung in ihre Betriebs-/Transportstellung erfolgt mit Hilfe von hydraulischen Betätigungsvorrichtungen in Form von Arbeitszylindern, die am Bedienstand der Erntemaschine durch die Bedienperson über die Zentralhydraulik des Erntemaschinenkomplexes angesteuert werden. In den Endlagen der Betriebs- oder Transportstellung sind die hydraulischen Arbeitszylinder verriegelt. Auf diese Weise ist gewährleistet, daß die Elemente der Ablegevorrichtung sicher fixiert sind und in einem möglichst störungsfreien Betriebsregime gearbeitet werden kann.

Für die Anordnung der nicht eingeschwenkten Elemente der Ablegevorrichtung in ihrer Transportstellung bieten sich mehrere Varianten an. Gemäß einer ersten Ausführung besitzt der Boden des Preßkanals innerhalb des Einzugsbereiches der Elemente ein kastenförmiges Hohlprofil, in das die Elemente schubladenartig eingezogen und unterhalb der Ebene des Preßkanalbodens aufgenommen werden. Die Transportrollen der Ablegevorrichtung dienen dabei gleichzeitig als Laufrollen, die das Ein- und Ausfahren der nicht zu verschwenkenden Elemente unterstützen.

Anstelle des kastenförmigen Hohlprofils sind gemäß einer weiteren Ausführungsvariante Laufschienen zur Aufnahme der Transportrollen unterhalb der Ebene des Preßkanalbodens vorgesehen, über die die nicht eingeklappten Elemente der Ablegevorrichtung in ihrer Transportstellung aufgenommen werden.

Nach einem weiteren Merkmal der Erfindung sind an den Tragrahmen der schubladenartig in ihre Transportstellung verfahrbaren Elemente der Ablegevorrichtung Führungsrollen vorgesehen, die auf senkrecht zur Rahmenebene angeordneten Zapfen so gelagert sind, daß sie aus der Ebene des Tragrahmens hervorstehen. Korrespondierend zu der Führungsrollenanordnung sind im Preßkanalboden einzelne voneinander beabstandete Hohlprofilträger vorgesehen, die sich in Längsachse des Preßkanals erstrecken und die Führungsrollen aufnehmen, wobei im Einschubbereich der Elemente Aussparungen in den Hohlprofilträgern für den Durchgang der Lagerzapfen vorgesehen sind.

Vorteilhafterweise sind in den Endlagen der einschiebbaren Elemente Führungsblöcke vorgesehen, die zusätzlich zu den Führungsrollen Abschnitte des Tragrahmens aufnehmen und die sichere Haltung und Fixierung der Elemente der Ablegevorrichtung in der Betriebs- und Transportstellung unterstützen.

Gegenüber den bisher bekannten Lösungen zur Verstellung der Ablegevorrichtung in eine oder aus einer Arbeitsstellung in eine Transportstellung ohne manuelle Tätigkeit der Bedienperson verfügt die erfindungsgemäße Lösung über einen relativ einfachen und funktionssicheren konstruktiven Aufbau, der sich mit relativ einfachen Mitteln sehr kostengünstig herstellen läßt. Zudem erfüllt die erfindungsgemäße Ablegevorrichtung alle Anforderungen für einen sicheren Arbeits- und Transportbetrieb.

Die Erfindung soll nachstehend an einem Ausführungsbeispiel näher erläutert werden. In den dazugehörigen Zeichnungen zeigen:
- Fig. 1 -: den rückwärtigen Endabschnitt einer Ballenpresse mit einer in Arbeits- und Betriebsstellung befindlichen Ablegevorrichtung, wobei das für die Transportstellung eingeschwenkte Abschlußelement in Strich-Punkt-Linien dargestellt ist
- Fig. 2 -: die erfindungsgemäße Ablegevorrichtung in der Transportstellung
- Fig. 3 -: den Anschluß der Betätigungsvorrichtung für das Abschlußelement der Ablegevorrichtung an die Zentralhydraulik des Erntemaschinenkomplexes
- Fig. 4 -: Preßkanal der Ballenpresse mit einem Teil der in Transportstellung befindlichen Ablegevorrichtung in schematischer Darstellung

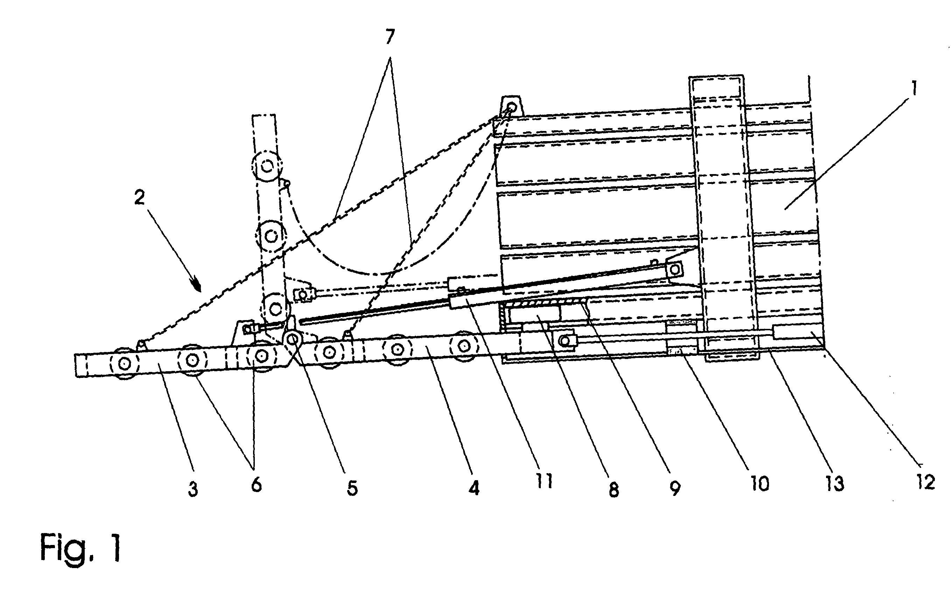

An der rückwärtigen Stirnseite des Preßkanals 1 befindet sich eine Ablegevorrichtung 2, mit deren Hilfe die den Preßkanal verlassenden Ballen 17; 18 aus gepreßtem Erntegut auf die Erntefläche abgesetzt werden. Die Ablegevorrichtung besteht aus einzelnen, mit Transportrollen 6 versehenen Elementen 3; 4, die über ein einfaches Drehgelenk 5 gegeneinander ein- und ausklappbar verbunden und in ihrer Arbeitsstellung durch Halteketten 7 am Gehäuse des Preßkanals 1 aufgehängt sind. Durch die in ihrer Arbeitsstellung befindliche Ablegevorrichtung 2, die in Fig. 1 dargestellt ist, wird die Gesamtlänge des Erntemaschinenkomplexes wesentlich erhöht.

Um unter anderem die zulässigen Abmessungen von Fahrzeugen und Maschinen während des Transportes auf öffentlichen Straßen einzuhalten und nicht zu überschreiten, sind Ablegevorrichtungen so ausgebildet angeordnet, daß sie für den Straßentransport aus einer Arbeits- und Betriebsstellung in eine Transportstellung umgerüstet werden können, wobei die zu treffenden Maßnahmen im Interesse einer Verkürzung der Stillstandszeiten und der Reduzierung des manuellen Arbeitsaufwandes hierzu auf mechanischem Wege durchführbar und vom Bedienstand des Erntemaschinenkomplexes vorgenommen werden sollten.

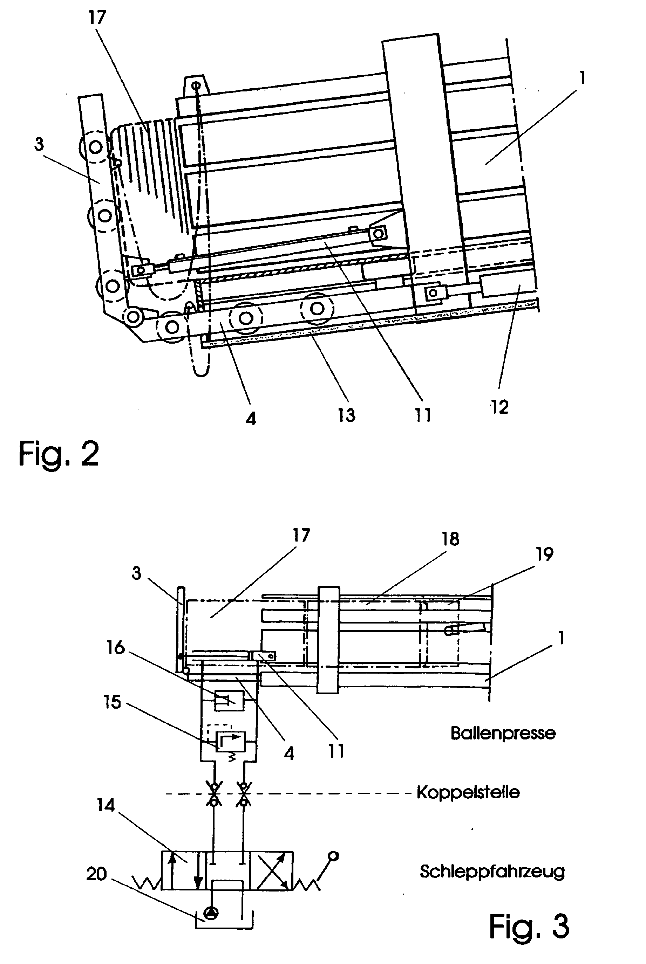

Zur Lösung dieser Forderungen wird das Abschlußelement 3 der Ablegevorrichtung 2 mit Hilfe einer Betätigungsvorrichtung 11, die am Tragrahmen des Elementes 3 und am Gehäuse des Preßkanals angelenkt und mit der Zentralhydraulik 20 des Erntemaschinenkomplexes verbunden ist, in eine annähernd senkrechte Position verschwenkt und das nicht einklappbare Element 4 mit Hilfe der Betätigungseinrichtung 12, ebenfalls in Form eines hydraulischen Arbeitszylinders, schubladenartig unterhalb des Bodens 9 des Preßkanals 1 verbracht. In dieser Transportstellung, die in Fig. 2 dargestellt ist, verschließt das in einer annähernd senkrechten Position eingeklappte Element 3 die Auslaßöffnung des Preßkanals 1 und dient dabei gleichzeitig als Sicherungselement, mit dem das Herausrutschen eventuell im Preßkanal 1 verbliebener Ballen 17; 18 während des Straßentransportes sicher verhindert werden kann.

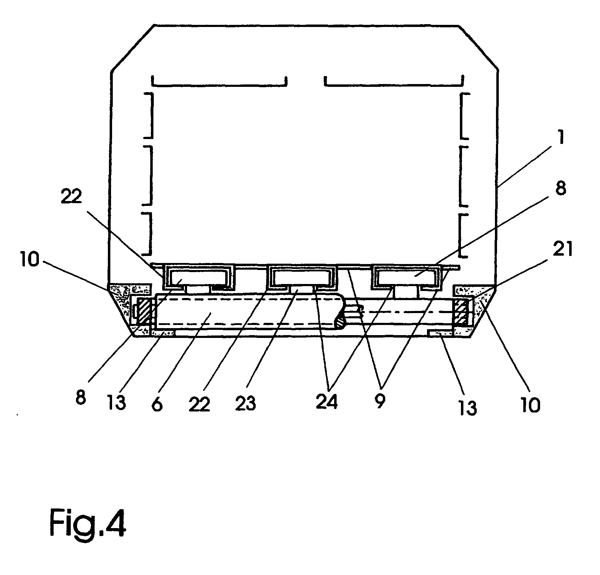

Wie aus Fig. 1 und 4 weiter hervorgeht, besitzt der Boden 9 des Preßkanals 1 Hohlprofilträger 22, die sich in der Längsachse des Preßkanals erstrecken und voneinander beabstandet sind. Die Hohlprofilträger 22 dienen zur Aufnahme von Führungsrollen 8, die das schubladenartige Verbringen des Elementes 4 beim Umrüsten der Ablegevorrichtung 2 in die Transportstellung unterstützen. Die Führungsrollen 8, die konstruktionsseitig die Verbindung zwischen dem Boden 9 des Preßkanales 1 und dem Element 4 der Ablegevorrichtung 2 herstellen, sind auf Lagerzapfen 23 - Fig. 4 - drehbar angeordnet, die am Tragrahmen 21 des Elementes 4 angeordnet sind und aus der horizontalen Ebene des Elementes 4 hervorstehen. Im Einschubbereich des Elementes 4 unter den Boden 9 des Preßkanals 1 sind die Hohlprofilträger 22 mit einer Aussparung 24 für den Durchgang der Lagerzapfen 23 versehen.

Unterhalb des Preßkanals sind Laufschienen 13 für die Transportrollen 6 vorgesehen, die beim Umrüsten der Ablegevorrichtung in die jeweilige Betriebs- oder Transportstellung gleichzeitig als Laufrollen dienen und auf diese Weise den Umrüstungsprozeß und die sichere Anordnung des Elementes 4 in seiner Transportstellung unterstützen. Ferner sind Führungsblöcke 10 vorgesehen, in denen Abschnitte des Tragrahmens 21 des Elementes 4 in den Endlagen der Betriebs- oder Transportstellung zusätzlich fixiert werden.

Die Arbeitszylinder 11 und 12, mit deren Hilfe die Ablegevorrichtung 2 in ihre Betriebs- oder Transportstellung verbracht werden kann, sind auf an sich bekannte Weise über Wegeventile 14 mit der Zentralhydraulik 20 des Erntemaschinenkomplexes verbunden. Im Hydraulikkreis des Arbeitszylinders 11 ist zusätzlich ein Druckbegrenzungsventil 15 und ein Sperrventil 16 vorgesehen.

Das Druckbegrenzungsventil 15 dient als Sicherungseinrichtung, die den Arbeitszylinder beim Auftreten hoher Arbeitsdrücke über einen maximal zulässigen Wert abschaltet, um Maschinenausfälle infolge von Havarien beim Umrüsten der Ablegevorrichtung 2 zu vermeiden.

Mit Hilfe des Sperrventils kann der hydraulische Arbeitszylinder 11 entriegelt und das in der Transportstellung befindliche Element 3 zurückgeschwenkt werden, so daß die Auslaßöffnung des Preßkanales 1 freigegeben und dieser beispielsweise für Reparatur- und Kontrollarbeiten zugänglich ist.

### Bezugszeichenaufstellung

- 1: Preßkanal
- 2: Ablegevorrichtung
- 3: einklappbares Abschlußelement der Ablegevorrichtung
- 4: verbringbares Element der Ablegevorrichtung
- 5: Drehgelenk
- 6: Transport/Laufrolle
- 7: Haltekette
- 8: Führungsrolle
- 9: Boden des Preßkanals
- 10: Führungsblock
- 11: Betätigungsvorrichtung/Arbeitszylinder
- 12: Betätigungsvorrichtung/Arbeitszylinder
- 13: Laufschiene
- 14: Wegeventil
- 15: Druckbegrenzungsventil
- 16: Sperrvertil
- 17: Ballen
- 18: Ballen
- 19: Preßkolben
- 20: Zentralhydaulik
- 21: Tragrahmen
- 22: Hohlprofilträger
- 23: Lagerzapfen
- 24: Aussparung

## Patentansprüche

1. Ballenpresse für landwirtschaftliche Erntegüter, wie Silage, Heu, Stroh oder dergleichen, mit einer, in eine Betriebs- oder Transportstellung verbringbaren Einrichtung zum Ablegen der gepreßten Ballen auf eine Erntefläche, bestehend aus mehreren, gelenkig miteinander verbundenen Elementen, die durch Halteketten an das Gehäuse des Preßkanals angelenkt sind, wobei die Öffnung des Preßkanals durch die in Transportstellung befindlichen Elemente verschlossen ist, **dadurch gekennzeichnet, daß** für die Umrüstung der Ablegevorrichtung (2) aus einer Betriebsstellung in die Transportstellung und umgekehrt ein Abschlußelement (3) der Ablegevorrichtung (2) um ca. 90° zur Preßrichtung einklappbar und mindestens ein Elemente (4) schubladenartig unter den Boden (9) des Preßkanals (1) der Ballenpresse verbringbar angeordnet ist.

2. Ballenpresse nach Anspruch 1, **dadurch gekennzeichnet, daß** in den Hydraulikkreis einer Betätigungsvorrichtung (11) der Ablegevorrichtung für die gepreßten Erntegutballen (17; 18) Stellglieder (15; 16) vorgesehen sind, von denen mindestens ein Stellglied (15) als Sicherheitseinrichtung dient und über mindesten ein weiteres Stellglied (16) in Abhängigkeit von den Betriebsbedingungen die Sperrfunktion der Betätigungsvorrichtung (11) aufgehoben und durch Absenken des eingeklappten Elementes (3) die Auslaßöffnung des Preßkanals (1) freigeben wird.

3. Ballenpresse nach Anspruch 1, **dadurch gekennzeichnet, daß** der Boden (9) des Preßkanals (1) ein Kastenprofil besitzt und die nicht eingeklappten Elemente (4) der Ablegevorrichtung (2) in der Transportstellung in den so entstandenen Stauraum verbracht sind.

4. Ballenpresse nach Anspruch 1 und 2, **dadurch gekennzeichnet, daß** die Ablegevorrichtung (2) eine Rollenrutsche ist und die Transportrollen (6) der Rutsche als Laufrollen für das Verbringen der Ablegevorrichtung (2) in ihrer Transportstellung dienen.

5. Ballenpresse nach Anspruch 1, **dadurch gekennzeichnet, daß** an den verbringbar angeordneten Elementen (4) der Ablegevorrichtung (2) Führungsrollen (8) vorgesehen sind, die in Hohlprofilträgern (22) des Preßkanals (1) laufen und eine verstellbare Wirkverbindung zwischen dem Boden (9) des Preßkanales (1) und den Elementen (4) herstellen.

6. Ballenpresse nach einem der Ansprüche 1 und 3 bis 5, **dadurch gekennzeichnet, daß** am Boden (23) des Preßkanals (1) Laufschienen (13) zur Aufnahme der als Laufrollen dienenden Transportrollen (6) vorgesehen sind und der Tragrahmen (21) der Elemente (4) der Ablegevorrichtung (2) in Führungsblöcken (10) fixiert ist.

7. Ballenpresse nach Anspruch 1 und 2, **dadurch gekennzeichnet, daß** die Betätigungsvorrichtung (11; 12) der Ablegevorrichtung (2) über Wegeventile (14) mit der Zentralhydraulik (20) eines Erntemaschinenkomplexes verbunden und in dem Hydraulikkreis der Betätigungsvorrichtung (11) ein manuell zu betätigendes Sperrventil (16) und ein als Überlastsicherung dienendes Druckbegrenzungsventil (15) angeordnet sind.

8. Ballenpresse nach Anspruch 1, 2 und 7, **dadurch gekennzeichnet, daß** der Anstieg des hydraulischen Arbeitsdruckes und das Ansprechen des als Überlastsicherung dienenden Druckbegrenzungsventils (15) im Bedienstand des Erntemaschinenkomplexes optisch und akustisch dargestellt ist.

## Claims

1. Bale press for agricultural harvests such as silage, hay, straw or such, with a device that can be put in an operational or transport position for setting the pressed bales on a harvested area, consisting of several elements connected to one another with joints which are controlled by holding chains on the housing of the pres channel, whereby the opening of the press channel is closed elements when in transport position, **characterized by** a closure element (3) for converting the setting tool (2) from the operational position into the transport position and vice-versa is located on the setting tool (2) so that it can be folded by ca 90° to the press tool and at least one element (4) can be attached to the bottom (9) of the press channel (1) of the bale press like a drawer.

2. Bale press in accordance with claim 1, **characterized by** actuators (15,16) being located in the hydraulic cycle of an activator (11) of the setting tool (2) for the pressed bales (17,18); of which at least one actuator (15) serves as a safety device and with at least one other actuator (16) depending on the operating conditions releases the blocking function of the activator (11) and by lowering the folded element (3) opens the press channel (1).

3. Bale press in accordance with one of the claim 1, **characterized by** the bottom (9) of press channel (1) having a box profile and elements (4) of the setting tool (2) that are not folded are placed in the storage area created for transport.

4. Bale press in accordance with one of the claims 1 and 2, **characterized by** the setting tool (2) being a rolling slide and the transport rollers (6) of the slide serve as rollers for putting setting tool (2) in its transport position.

5. Bale press in accordance with one of the claim 1, **characterized by** the elements (4) of the setting tool (2) having guide wheels (8) which run through the hollow bars (22) of the press channel (1) and provide an adjustable connection between bottom (9) of press channel (1) and the elements (4).

6. Bale press in accordance with one of the claims 1 and 3, **characterized by** rails (13) on the bottom (23) of the press channel (1) for holding the transport rollers which serve as runners and the supporting frame (21) of the elements (4) of the setting tool (2) are attached in guide blocks (10).

7. Bale press in accordance with one of the claims 1 and 2, **characterized by** the activator (11, 12) of the setting tool (2) is attached to the central hydraulics (20) of a harvesting machine with directional control valves (14) and a manually activated stop valve (16) in the hydraulic system of the activator (11) and an overload safety pressure valve (15) is attached.

8. Bale press in accordance with one of the claims 1, 2 and 7, **characterized by** the increase of the hydraulic working pressure and the addressing of the overload pressure valve (15) are displayed optically and acoustically in the cabin of the harvester.

## Revendications

1. Presse à balles destinée à la récolte de matières agricoles, comme le fourrage ensilé, le foin, la paille ou les matières semblables, munie d'un dispositif pouvant passer dans une position de service ou de transport et destiné à déposer les balles pressées sur une aire de récolte, se composant de plusieurs éléments assemblés les uns aux autres de façon à s'articuler qui sont articulés au niveau du bâti du canal de pressage grâce à des chaînes de maintien, l'orifice du canal de pressage étant fermé hermétiquement par les éléments se trouvant en position de transport, **caractérisée en ce que**, pour le passage du dispositif de dépôt (2) d'une position de service en position de transport et inversement, un élément de fermeture (3) du dispositif de dépôt (2) peut être replié d'env. 90° par rapport au sens de pressage et au moins un élément (4) est disposé de façon à pouvoir rentrer à la façon d'un tiroir dessous le fond (9) du canal de pressage (1) de la presse à balles.

2. Presse à balles selon la revendication 1, **caractérisée en ce que** des organes de commande (15 ; 16) dont au moins un organe de commande (15) sert de dispositif de sécurité et dont au moins un autre organe de commande (16) permet d'enlever la fonction de blocage du dispositif d'actionnement (11) en fonction des conditions de service et de libérer l'orifice de sortie du canal de pressage (1) en abaissant l'élément replié (3) sont prévus dans le circuit hydraulique d'un dispositif d'actionnement (11) du dispositif de dépôt destiné aux balles de matière récoltée pressée (17 ; 18).

3. Presse à balles selon la revendication 1, **caractérisée en ce que** le fond (9) du canal de pressage (1) possède un profil en caisson et les éléments non repliés (4) du dispositif de dépôt (2) sont placés en position de transport dans l'espace de stockage ainsi obtenu.

4. Presse à balles selon la revendication 1 et 2, **caractérisée en ce que** le dispositif de dépôt (2) est une rampe d'éjection à rouleaux et les rouleaux de transport (6) de la rampe d'éjection servent de rouleaux de roulement pour le passage du dispositif de dépôt (2) en position de transport.

5. Presse à balles selon la revendication 1, **caractérisée en ce que** des rouleaux de guidage (8) qui s'étendent dans des poutres en profilé creux (22) du canal de pressage (1) et génèrent une liaison fonctionnelle réglable entre le fond (9) du canal de pressage (1) et les éléments (4) sont prévus sur les éléments (4) du dispositif de dépôt (2) qui sont disposés de façon à pouvoir passer d'une position à l'autre.

6. Presse à balles selon l'une quelconque des revendications 1 et 3 à 5, **caractérisée en ce que** des rails de roulement (13) destinés à loger les rouleaux de transport (6) servant de rouleaux de roulement sont prévus sur le fond (23) du canal de pressage (1), et le cadre de support (21) des éléments (4) du dispositif de dépôt (2) est fixé dans des blocs de guidage (10).

7. Presse à balles selon la revendication 1 et 2, **caractérisée en ce que** le dispositif d'actionnement (11 ; 12) du dispositif de dépôt (2) est relié au système hydraulique central (20) d'un ensemble de machine à récolter par l'intermédiaire de distributeurs (14), et un clapet à actionnement manuel (16) et un limiteur de pression (15) servant de sécurité de surcharge sont disposés dans le circuit hydraulique du dispositif d'actionnement (11).

8. Presse à balles selon la revendication 1, 2 et 7, **caractérisée en ce que** l'augmentation de la pression de travail hydraulique et le déclenchement du limiteur de pression (15) servant de sécurité de surcharge sont représentés sur le poste de commande de l'ensemble de la machine à récolter de façon optique et acoustique.
